# EUROPEAN PATENT APPLICATION

(11) **EP 3 252 597 A1**
(43) Date of publication of application: **06.12.2017**
(21) Application number: 17172389.3
(22) Date of filing: 23.05.2017
(51) Int. Cl.: G06F 9/44, G06F 3/048

(54) **REGULATING DISPLAY DATA BY A DISPLAY SYSTEM**

(30) Priority: 31.05.2016 US 201615168416
(71) Applicant: GE Aviation Systems LLC, Grand Rapids, MI 49512-1991 (US)
(72) Inventor: ZANDEE, James Creighton, Grand Rapids, MI 49512-1934 (US); JONES, Kevin, Grand Rapids, MI 49512 (US); FAIRCHILD, David Allen, Grand Rapids, MI 49512-1934 (US); SYKES, Gregory Reed, Grand Rapids, MI 49512 (US)
(74) Representative: Williams, Andrew Richard

(57) **Abstract**

Systems and methods of displaying data are provided. A display system (122) can include one or more display windows (110) configured to provide for display graphical representations of data. One or more user applications (130) can be configured to provide data to the display system (122). The display system (122) is configured to receive data indicative of a user request to view display data, provide for display on at least one of the one or more display windows (110) a first subset of the display data, obtain one or more data sets corresponding to a second subset of the display data from at least one of the one or more user applications (130), and subsequent to obtaining the one or more data sets, provide for display on at least one of the one or more display windows (110) the second subset of the display data.

## Description

### FIELD

The present subject matter relates generally display systems associated with aerial vehicles, and more particularly to regulating display data by such display systems.

### BACKGROUND

Data related to aircraft conditions, performance tracking, or health monitoring for aircraft are generally available. Analysis of such aviation data can offer useful information for maintenance, prognostics, control, routing, and/or other objectives of the aircraft. For example, modem aircraft are equipped with a large number of different computers that provide a wide range of control functions and that output various data. Aircraft may also have a large number of sensors that provide data regarding various conditions associated with the aircraft, including vibrational data, engine data, wind data, or other forms of aircraft condition data. Thus, modem aircraft typically output a very large amount of data.

Such data can be displayed in a user interface associated with a cockpit display system associated with the aircraft, for instance, in response to a request from the user to view such data. For instance, in response to the user request, one or more user applications associated with the aircraft can determine or update the appropriate data, and can provide the data to the cockpit display system for display in the user interface. Conventional cockpit display systems generally wait to display the data only after all of the updated data is available for display.

### BRIEF DESCRIPTION

Aspects and advantages of examples of the present disclosure will be set forth in part in the following description, or may be learned from the description, or may be learned through practice of the embodiments.

One example aspect of the present disclosure is directed to a system for displaying data. The system includes a display system comprising one or more display windows configured to provide for display graphical representations of data. The system further includes one or more user applications configured to provide data to the display system. The display system further includes wherein the display system comprises one or more control devices configured to perform operations. The operations include receiving data indicative of a user request to view display data, providing for display on at least one of the one or more display windows a first subset of the display data, obtaining one or more data sets corresponding to a second subset of the display data from at least one of the one or more user applications, and subsequent to obtaining the one or more data sets, providing for display on at least one of the one or more display windows the second subset of the display data.

Another example aspect of the present disclosure is directed to an aircraft. The aircraft includes a display system comprising one or more display windows configured to provide for display graphical representations of data. The aircraft further includes one or more user applications configured to provide data to the display system. The display system includes one or more control devices configured to perform operations. The operations include receiving data indicative of a user request to view display data, providing for display on at least one of the one or more display windows a first subset of the display data, obtaining one or more data sets corresponding to a second subset of the display data from at least one of the one or more user applications, and subsequent to obtaining the one or more data sets, providing for display on at least one of the one or more display windows the second subset of the display data.

Yet another example aspect of the present disclosure is directed to a method of displaying data. The method includes receiving data indicative of a user request to view display data on a display system associated with an aircraft. The display system includes one or more display windows. The method further includes providing for display on at least one of the one or more display windows a first subset of the display data. The method further includes obtaining one or more data sets corresponding to a second subset of the display data from at least one of the one or more user applications associated with the aircraft. The method further includes subsequent to obtaining the one or more data sets, providing for display on at least one of the one or more display windows the second subset of the display data.

Variations and modifications can be made to these example aspects of the present disclosure.

These and other features, aspects and advantages of various examples will become better understood with reference to the following description and appended claims. The accompanying drawings, which are incorporated in and constitute a part of this specification, illustrate aspects of the present disclosure and, together with the description, serve to explain the related principles.

### BRIEF DESCRIPTION OF THE DRAWINGS

Detailed discussion of embodiments directed to one of ordinary skill in the art are set forth in the specification, which makes reference to the appended figures, in which:
FIG. 1 depicts a portion of an example aircraft according to example embodiments of the present disclosure;
FIG. 2 depicts a block diagram of an example system for displaying data according to example embodiments of the present disclosure;
FIGS. 3-5 depict example graphical representation configurations according to example embodiments of the present disclosure;
FIG. 6 depicts a flow diagram of an example method of displaying data according to example embodiments of the present disclosure;
FIG. 7 depicts a flow diagram of an example method of displaying data according to example embodiments of the present disclosure; and
FIG. 8 depicts an example system according to example embodiments of the present disclosure.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

Example aspects of the present disclosure are directed to regulating the display of data by a cockpit display system associated with an aircraft. For instance, a cockpit display system can include one or more display windows configured to display graphical representations of data. The cockpit display system can be communicatively coupled to one or more user applications associated with the aircraft. The cockpit display system can be configured to receive a user input by a user (e.g. pilot, copilot, etc.) indicative of a request by the user to view display data associated with the aircraft. The display system can be configured to display the display data in accordance with one or more display schemes. For instance, the cockpit display system can display a first subset of the display data. The cockpit display system can then receive or obtain one or more data sets corresponding to a second subset of the display data, and subsequent to obtaining the one or more data sets, can provide for display the second subset of the display data.

More particularly, the display data can include one or more static representations of data, and/or one or more dynamic representations of data. In some implementations, the representations of data can correspond to widgets as defined by the ARINC 661 aviation standard. For instance, the cockpit display system can store a plurality of widgets in one or more memory devices implemented within or otherwise associated with the cockpit display system. Dynamic representations of data (e.g. dynamic widgets) can include or otherwise be associated with variable data values. For instance, such variable data values can correspond to fuel levels, vibrational data, engine data (e.g., oil pressure, engine speed, etc.), full flight data, wind data, location data, or any other suitable aircraft data. The variable data values associated with the dynamic representations of data can be determined by one or more user applications associated with the aircraft. Static representations of data (e.g. static widgets) can include representations of data that do not include a variable component. For instance, a static graphical representation of data can include graphical user interface (GUI) elements, such as one or more labels, lines, dividers, buttons, borders, shapes, outlines, or any other suitable GUI element.

In some implementations, a user application can refer to a software application hosted by one or more computing devices communicatively coupled to the cockpit display system. For instance, in some implementations, the one or more user applications can include a flight management system, a weather system, radar display system, an airport surface map, or other suitable user application. The user applications can be configured to determine data associated with the aircraft or the flight and to provide the data to the cockpit display system, for instance, in response to receiving a request for the data from the cockpit display system.

As indicated, the cockpit display system can be configured to receive a user input from a user indicative of a request to view display data. For instance, the user input may be indicative of a panel selection by the user. For instance, a user interface of the cockpit display system can include one or more panels that each include one or more widgets. For instance the user interface can include a preflight panel, a cruise panel, a progress panel or any other suitable panel. The preflight panel can include one or more widgets associated with a preflight status of the aircraft, such as one or more preflight parameters or metrics associated with the aircraft. As another example, the cruise panel can include one or more widgets associated with a cruising status of the aircraft, such as one or more cruising parameters or metrics associated with the aircraft. In this manner, each panel can include one or more static widgets and/or one or more dynamic widgets associated with a category of the panel.

In response to the user input, the cockpit display system can provide one or more widget update events to one or more suitable user applications. For instance, the update events can be indicative of the user input. The one or more update events can correspond to one or more data representations (e.g. widgets) to be displayed by one or more display units in the cockpit display system in response to the user input. In particular, the update event(s) can correspond to a request for the user application(s) to determine one or more static and/or dynamic widgets to be displayed by the cockpit display system in response to the user input. In addition, the update event(s) can correspond to a request for the user application(s) to determine and/or update one or more sets of data to be displayed by the cockpit display system in conjunction with the dynamic widgets associated with the user request. The user application(s) can then provide one or more widget update commands back to the cockpit display system. The update command(s) can include data indicative of one or more static and/or dynamic widgets to be displayed in response to the user input. The update command(s) can further include data values to be displayed in conjunction with the one or more dynamic widgets.

As an example, a user may provide an input to the cockpit display system indicative of a request to view a predicted time of arrival associated with an aircraft. The cockpit display system can provide one or more update events to one or more suitable user applications (e.g. flight management system) based at least in part on the user input. The flight management system can determine one or more widgets to be displayed by the cockpit display system in response to the user input. In particular, the flight management system can determine one or more static widgets to be displayed, such as one or more GUI elements to be displayed, and one or more dynamic widgets to be displayed. For instance, the dynamic widgets can include an editable widget associated with a current flight plan of the aircraft. In addition, the flight management system can determine a predicted time of arrival associated with the aircraft. The flight management system can then provide one or more update commands to the cockpit display system indicative of the one or more static and/or dynamic widgets to be displayed and the predicted time of arrival. The display system can then populate the dynamic widget associated with the time of arrival with the data value corresponding to the predicted time of arrival, as determined by the flight management system, and display the one or more static and/or dynamic widgets on one or more display units of the display system.

According to example aspects of the present disclosure, display of the display data can be staggered based at least in part on an availability of the display data. In particular, the display system can provide for display on one or more display devices the static widgets associated with the user request for display, and subsequent to the display of the static widgets, the display system can provide for display the dynamic widgets associated with the user request on the one or more display devices. As indicated, update events associated with the one or more widgets to be displayed require communication with one or more user applications, and/or a determination by the user application(s) of the selected data values to be displayed. In some implementations, communication associated with a provision for display of a dynamic widget can take longer to complete than communication associated with a provision for display of a static widget. The widgets can be provided for display in response to a respective availability of the widgets. For instance, the static widgets (e.g. GUI elements) can be provided for display immediately upon request for a new page of static and dynamic widgets, and the dynamic widgets (e.g. editable data values) can be provided for display upon the subsequent availability of the dynamic widgets values or data. In this manner, a first subset of the display data including the GUI elements (or other data) associated with the static widgets can be displayed. A second subset of the data including the data values associated with the dynamic widgets can be displayed by the display system after additional time allowed to correctly process and update all of the dynamic widgets, such that each dynamic widget displays current data values.

In some implementations, providing a widget for display can include enabling or setting a visibility attribute associated with the widget. For instance, the visibility attribute can dictate whether the widget is displayed by the display system. In this manner, when the visibility attribute is disabled, the widget will not be visible to a user of the cockpit display system. According to example aspects of the present disclosure, the visibility attribute of a set of widgets can be enabled based at least in part on an availability or an expected availability of the set of widgets and/or of the data associated with the set of widgets. In some implementations, the visibility attributes of the one or more static widgets associated with the user input can be enabled at a first time. The visibility attributes of the dynamic widgets associated with the user input can initially be disabled, and can be enabled subsequent to the display of the static widgets. For instance, in some implementations, the visibility attributes of the dynamic widgets can be respectively enabled upon an availability of all individual dynamic widgets. In this manner, dynamic widgets can be displayed only after each dynamic widget has been updated to include up-to-date data. In some implementations, the visibility attributes of the dynamic widgets can be collectively enabled when all of the dynamic widgets are available, such that the dynamic widgets are displayed substantially simultaneously.

In some implementations, a user application can provide instructions to the cockpit display system to enable or disable one or more widget visibility attributes based at least in part on an update event provided to the user application by the cockpit display system. Such instructions can be included in the widget update command provided to the cockpit display system. For instance, the user application can determine whether to enable or disable the visibility attributes of one or more widgets based at least in part on the update event indicative of the user input. The user application can then provide the update command that includes instructions to enable or disable the visibility attributes.

As an example, in response to receiving an update event from the cockpit display system, the user application can provide a first update command to the display system instructing the display system to enable the visibility attributes of the static widgets to be displayed in response to the user input, and to disable the visibility attributes of the dynamic widgets to be displayed in response to the user input. Once the data values associated with the dynamic widgets have been determined, the user application can send a second update command to the display system. The second update command can include the data values to be used in populating the dynamic widgets. The second update command can further include instructions to enable the visibility attributes of the dynamic widgets. In some implementations, the data values can be sent prior to the instructions to enable the dynamic widget visibility attributes. In this manner, the static widgets (e.g. GUI elements, etc.) can be displayed by the cockpit display system prior to the dynamic widgets. The dynamic widgets can be displayed in response to an availability of the data to be used in populating the dynamic widgets.

In some implementations, a plurality of widgets can be grouped together. For instance, in implementations wherein the ARINC 661 standard is used, one or more widgets may be grouped in a hierarchal manner under a parent widget called a container widget. Container widgets can be configured to contain one or more widgets. In some implementations, a container widget can be configured to contain one or more other container widgets. The visibility of the widgets within a container widget can be controlled at least in part by a visibility attribute of the container widget. For instance, when the visibility attribute of the container widget is enabled, the widgets grouped within the container widget can also be visible on a display window of the cockpit display system. When the visibility attribute of the container widget is disabled, the grouped widgets can become invisible on the screen. In some implementations, the visibility can be hierarchical. For instance, if the visibility attribute of a widget is enabled but the visibility attribute of a container widget in which the widget is grouped is disabled, the widget can be invisible.

In such implementations, the dynamic widgets and the static widgets associated with the user input (e.g. the selected panel) can be grouped under one or more containers. For instance, each static widget can be grouped under a first container, and each dynamic widget can be grouped under a second container. In this manner, responsive to receiving the user input, the visibility attribute of the first container can be enabled, such that each static widget is made visible by the cockpit display system. When the editable data associated with the dynamic widgets become available, the visibility attribute of the second container can be enabled, such that each dynamic widget is made visible by the display system.

Staggering the display of the graphical data representations in response to a user input according to example aspects of the present disclosure can provide a smoother, more efficient user experience by creating a perception of increased responsiveness by the cockpit display system. For instance, by immediately providing for display the GUI elements associated with the static widgets, the system provides an initial response to the input even though the data values to be displayed may not be available. In addition, the initial display of the GUI elements can indicate to the user the organizational configuration of the displayed data, such that the user can become familiar with the data to be displayed and the manner in which the data will be displayed even before the data values are available. The subsequent display of the dynamic widgets (and the determined data values) can then allow the user to quickly and efficiently identify the desired data. As a non-limiting example, the display of data according example embodiments of the present disclosure can be advantageous when the cockpit display system is separated from the user application, such as when the cockpit display system in located on the ground and the user application is in an aircraft, such as an unmanned aerial vehicle. Such separation can cause slower communication between the cockpit display system and the user application. Staggering the display of data in accordance with example embodiments of the present disclosure can allow for an improved responsiveness of the system.

Such display of data according to example embodiments of the present disclosure can further avoid race conditions associated with the display user interface panels or pages. For instance, upon receiving a request to view a new panel or page, the panel or page currently being displayed can be removed from display (e.g. made invisible) while a thread updating such page or panel is still updating and/or while I/O data is still being received by the cockpit display system. The new static data associated with the requested page can then be displayed (e.g. made visible) prior to a sending of update data by a new thread associated with the requested page.

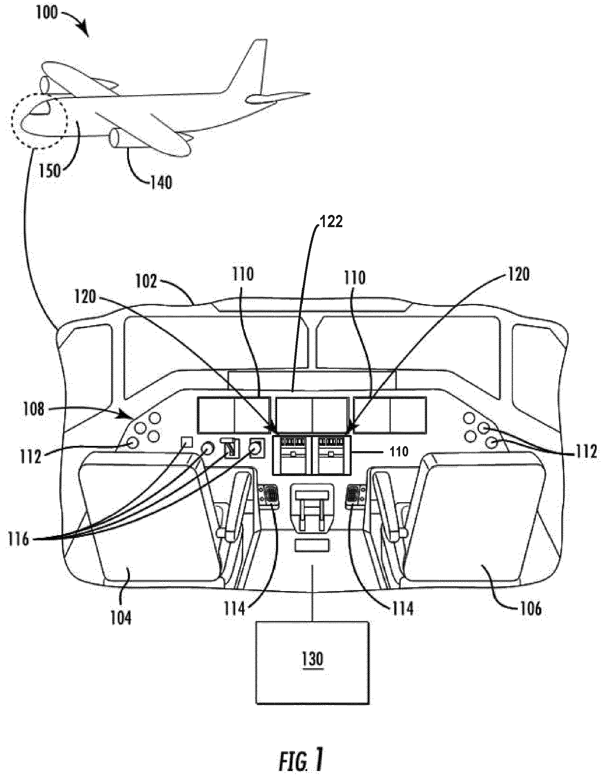

With reference now to the figures, example aspects of the present disclosure will be discussed in greater detail. For instance, FIG. 1 depicts a perspective view of a portion of an example aircraft 100 according to example embodiments of the present disclosure. The aircraft 100 can include, for instance, a cockpit 102, an engine 140, and a fuselage 150. A first user (e.g., a first flight crew member, a pilot) can be present in a seat 104 at the left side of the cockpit 102 and another user (e.g., a second flight crew member, a co-pilot) can be present at the right side of the cockpit 102 in a seat 106. The aircraft 100 can include a flight deck 108, which can include a cockpit display system 122. Cockpit display system 122 includes one or more multifunctional flight display devices 110 including one or more display screens. The aircraft can also include one or more instruments 112. In some implementations, the one or more instruments 112 can be located on the flight deck 108 in front of the one or more users and can provide information to aid in flying the aircraft 100.

Aircraft 100 can include one or more physical control interfaces 116. A physical control interface 116 can be, for example, a control interface that is configured to adjust a setting, parameter, mechanism, and/or condition of the aircraft 100. The physical control interfaces 116 can include, for instance, a button, momentary push button, compressible button, a switch mechanism, sliding control, level, knob, gauge, etc. For example, a physical control interface 116 can include a sliding manual control for setting and/or releasing a parking brake of aircraft 100. Under a typical operations checklist scenario, a user could manipulate the one or more physical control interfaces 116 to complete a checklist task. For instance, if a checklist item directed a user to release a parking brake, the user could physically manipulate the physical control interface 116 that is configured to release the parking brake.

The aircraft 100 can include one or more input devices 114 (e.g., in the cockpit 102) that can be used by one or more users to provide input to one or more processors and interact with the systems of the aircraft 100. The input devices 114 can include, for instance, any device suitable to accept input from a user and to convert that input to a graphical position on any of the multiple flight display devices 110. For instance, the one or more input devices 114 can include a joystick, multi-way rocker switches, mouse, trackball, keyboard, touch screen, touch pad, data entry keys, a microphone suitable for voice recognition, or any other suitable device. In some implementations, each user can have one or more separate input devices 114. Through use of the input devices 114, the one or more users can interact with the graphic and/or textual data elements provided for display on the screens of the display devices 110.

For instance, one or more user interfaces 120 can be displayed on the one or more display devices 110. For availability, one or more of the user interfaces 120 can be provided by a display device 110 on each side of the flight deck 108. In some implementations, one or more of the display devices 110 can be operably coupled with the input devices 114 such that a user can interact with the user interface 120 (e.g., cursor interaction via trackball, mouse, etc.) and the textual and/or graphical elements included in the user interface 120. Additionally, and/or alternatively, the display devices 110 can include a touch display screen that can allow a user to visualize the user interface 120 on the touch display screen and interact with the user interface 120 through the touch display screen.

In response to receiving a user input, cockpit display system 122 can communicate with one or more user applications 130. User application(s) 130 can be hosted by one or more remote client computing devices. As indicated, cockpit display system 122 can be configured to provide event data to user application(s) 130, and user application(s) 130 can be configured to provide update data to cockpit display system 122 such that cockpit display system 122 can provide the update data for display on at least one display device 110 in accordance with example embodiments of the present disclosure.

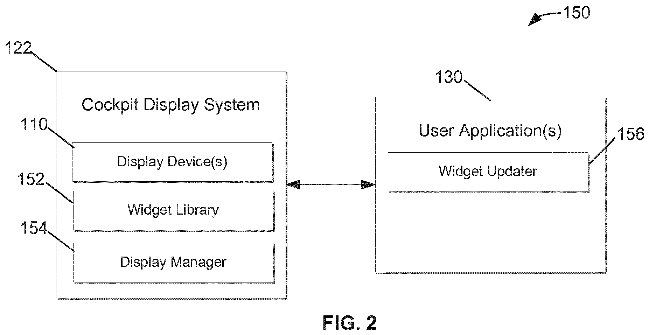

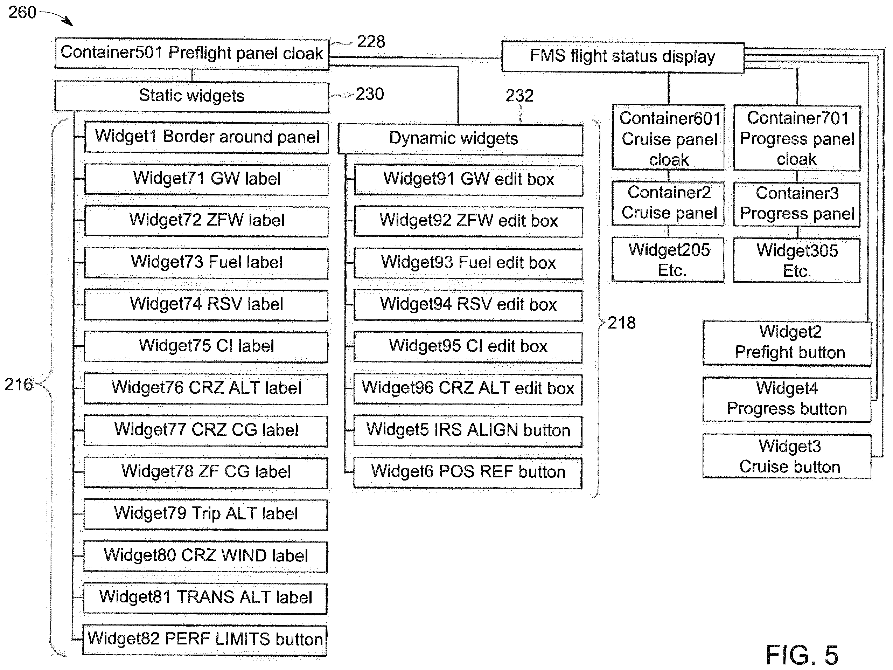

For instance, FIG. 2 depicts an example system 150 for displaying data according to example embodiments of the present disclosure. System 150 includes cockpit display system 122 and user application (130). As will be discussed with more detail below with regard to FIG. 5, cockpit display system 122 and user application(s) 130 can be hosted by or otherwise implemented within one or more suitable computing devices. Display system 122 can include display device(s) 110, a widget library 152, and a display manager 154. In this manner, display system 122 can communicate with each display device 110. In some implementations, each display device 110 can be associated with a separate cockpit display system. Widget library 152 can store and define a plurality of graphical representations, such as one or more widgets in compliance with the ARINC 661 standard. For instance, the graphical representations can have associated user application definition files (UADFs) specifying configuration information (e.g. size, shape, location, etc.) relating to the respective graphical representations. In some implementations, the definition files may have a binary format.

As indicated above, widget library 152 can include data indicative of a plurality of static data representations (e.g. static widgets) and data indicative of a plurality of dynamic data representations (e.g. dynamic widgets). For instance, the static widgets can include GUI elements or other graphical representations that are not editable or updateable. The dynamic widgets can include editable widgets populated with data determined by user application(s) 130. In this manner, upon receiving an update command from user application 130, display system 122 can render one or more widgets in accordance with instructions stored in widget library 152.

Display manager 154 can be configured to receive an input from a user indicative of a request by the user to view display data. The display data can be associated with a group or set of widgets or other graphical representations to be displayed in response to the user input. For instance, the group of widgets to be displayed in response to the user input can include one or more static widgets and one or more dynamic widgets. The display data can be specified in a UADF associated with the user application. For instance, user application 130 can provide a UADF to cockpit display system 122 specifying one or more widgets to be displayed by cockpit display system 122 in association with user application 130. For instance, the UADF can include configuration data (e.g. size, shape, location, etc.) associated with the widgets to be displayed. The UADF can further include a static or dynamic status of the widgets to be displayed. In some implementations, the widgets to be displayed can be defined in widget library 152. For instance, widget library 152 can include data indicative of each widget that cockpit display system 122 is capable of rendering. In this manner, the UADF provided by user application 130 can include at least a subset of the widgets stored in widget library 152.

In response to the user input, display manager 154 can provide data indicative of one or more widget update events to one or more suitable user applications 130. The update event(s) can provide an indication to user application(s) 130 of the display data requested by the user. For instance, the update event(s) can include a data indicative of the user input. Upon receiving the update event(s), a widget updater 156 associated with user application(s) 132 can determine one or more widgets to be displayed by cockpit display system 122 in response to the user input. User application(s) 130 can further determine or update data to be displayed in conjunction with the dynamic widgets to be displayed..

Display manager 154 and widget updater 156 can regulate the display of the display data (e.g. the static widgets and the dynamic widgets). For instance, display manager 154 and widget updater 156 can regulate the display of the display data based at least in part on an availability of the display data. For instance, widget updater 156 can provide one or more update commands to cockpit display system 122 indicative of one or more widgets to display or render. In some implementations, update command(s) can include a visibility attribute action to be associated with the widgets. For instance, the update command(s) can include instructions to enable or disable a visibility attribute of the widgets associated with the definition file provided by the user application. As indicated, the display of the widgets can be staggered based at least in part on an availability of the widgets. In this manner, widget updater 156 can provide a first update command to display system 122 including instructions for display manager 154 to provide a first subset of the display data for display by display device(s) 110, and can subsequently provide a second update command to display system 122 including instructions for display manager 154 to provide a second subset of the display data for display by display device(s) 110. In some implementations, the first subset of the display data can correspond to one or more first widgets that are available at a first time. The second subset of the display data can correspond to one or more second widgets that are not yet available for display at the first time. When the second widgets become available for display, widget updater 156 can provide the second update command to display system 122 and display manager 154 can provide the second widgets for display.

In some implementations, the first subset of the display data can correspond to the one or more static widgets to be displayed in response to the user input. As indicated, display of the static widgets can be handled using less communication between user application(s) 130 and display system 122 relative to display of the dynamic widgets. In this manner, the display of the static widgets can be achieved in a quicker manner in response to the user input compared to the display of the dynamic widgets. In such implementations, the second subset of the display data can correspond to the one or more dynamic widgets to be displayed in response to the user input. The need for communication with the user application(s) 130 to obtain the data used to populate the dynamic widgets can cause a delay in the availability of the dynamic widgets relative to the availability of the static widgets. In this manner, widget updater 156 can monitor an availability of the dynamic widgets, and can provide the second update command to display system 122 in response to a determined availability of the dynamic widgets.

As indicated, in some implementations, the data representations to be displayed in response to one or more user inputs can be organized in a hierarchical tree-like structure including one or more container widgets that group one or more additional widgets. For instance, the widgets to be displayed in response to a user input can be defined by such predetermined tree-like structure associated with the user input.

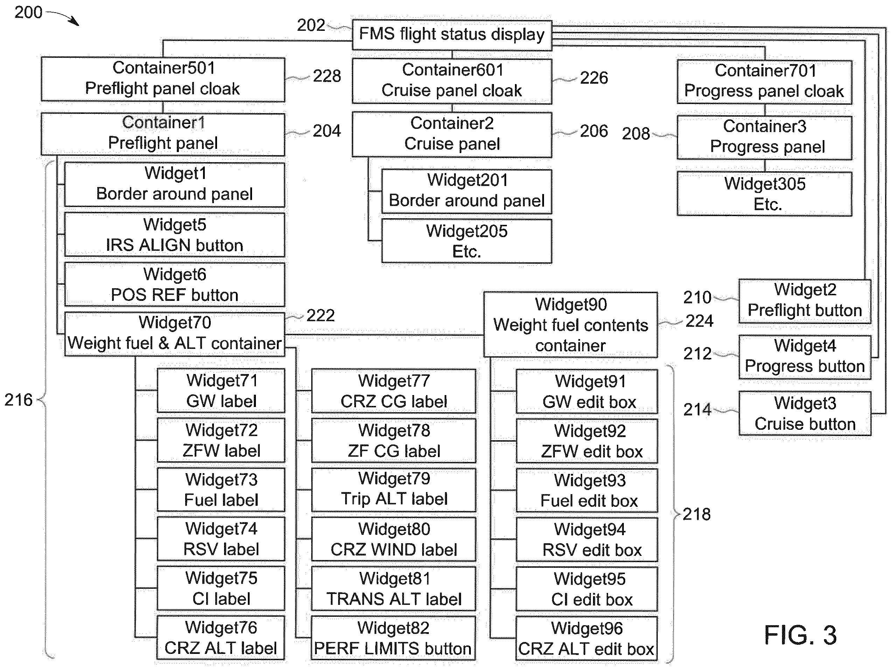

For instance, FIG. 3 depicts an example widget tree 200 according to example embodiments of the present disclosure. Tree 200 can be stored within user application(s) 130, or in other suitable location. In some implementations, tree 200 can be included within a UADF associated with the user application. Tree 200 includes a plurality of widgets associated with a flight management system (FMS) flight status display 202. In some implementations, tree 200 can include at least a subset of the all of the widgets associated with the FMS flight status display. As shown, flight status display can include a preflight panel container 204 associated with a preflight panel, a cruise panel container 206 associated with a cruise panel, and a progress panel container 208 associated with a progress panel. Each panel can have corresponding data to be displayed in response to a user selection of the panel. Preflight panel container 204, cruise panel container 206, and progress panel container 208 can group one or more widgets to be displayed in association with the preflight panel, the cruise panel, and the progress panel, respectively. Tree 200 further includes widgets corresponding to a preflight button 210, a cruise button 212, and a progress button 214. Such buttons can be interactive GUI elements that are selectable by the user. In response to the selection of a button (e.g. button 210, 212, or 214), cockpit display system 122 can perform one or more actions in accordance with tree 200. For instance, if the user selects preflight button 210, the user application 130 can request the cockpit display system 122 to make the cruise panel invisible, and can provide the preflight panel and one or more widgets associated with the preflight panel to the cockpit display system.

Preflight panel container 204 can include static widgets 216 and dynamic widgets 218. As shown, dynamic widgets 218 correspond to various "edit boxes" that can be populated with variable data values determined, for instance, by user application(s) 130. Static widgets 216 correspond to GUI elements, such as various buttons, labels and panels.

Preflight panel container 204 further includes containers 222, and 224. In accordance with the hierarchical structure associated with tree 200, preflight panel container 204 can group each widget associated with the preflight panel. Containers 222 and 224 each group a subset of the widgets associated with the preflight panel. For instance, container 224 is included within the widgets grouped by container 222. Container 224 groups the dynamic widgets 218 associated with the preflight panel. In this manner, the dynamic widgets 218 can be segregated from the static widgets 216.

The visibility of the widgets on display device(s) 110 can be controlled by a visibility attribute respectively associated with the widgets. For instance, a widget can be made visible by enabling the widget's visibility attribute, and the widget can be made invisible by disabling the widget's visibility attribute. In some implementations, the visibility of a widget on display device(s) 110 can be controlled by a visibility attribute of a container widget under which the widget is grouped. For instance, enabling the visibility attribute of a container widget can make visible each widget grouped under the container widget. In some implementations, a widget can override the visibility attribute of the container widget. For instance, if the visibility attribute of container 222 is enabled, all of the preflight panel container 204 widgets will initially be made visible. If the visibility attribute of a widget grouped under container 222 is then subsequently disabled, the widget will be made invisible.

In this manner, display manager 154 can be configured to regulate the display of the display data associated with the user response by regulating the visibility attributes of the widgets to be displayed in response to the user input (e.g. in response to receiving an update command from user application(s) 130). As an example, display manager 154 can enable or disable (e.g. in response to instructions from user application 130) the visibility attribute of each individual widget to be displayed in response to a user input to regulate the display of the widgets in accordance with example embodiments of the present disclosure. As another example, display manager 154 can control the visibility attribute of one or more container widgets associated with the user input.

For instance, in response to a user selection of preflight button 210, display manager 154 can disable the visibility attribute of cruise panel cloak 226 grouping every widget (e.g. container widgets and individual widgets) associated with the cruise panel. In this manner, cruise panel container 206 and each widget associated with cruise panel container 206 can be made invisible on display device(s) 110. In some implementations, the cruise panel can continue to send updates and/or be updated after the cruise panel cloak 226 is made invisible. Such updates will not be displayed by the display system, as the cruise panel widgets are invisible. Display manager 154 can then enable the visibility attribute of a preflight panel cloak 228 grouping every widget associated with preflight panel container 204. Display manager 154 can further disable the visibility attribute of container 224 grouping the dynamic widgets 218, thereby making the dynamic widgets 218 invisible on display device(s) 110. In this manner, the GUI elements associated with static widgets 216 can be visible on display device(s) 110, but the dynamic widgets 218 can be invisible. Display manager 154 can then enable the visibility attribute of container 224 when the dynamic widgets 218 are available for display.

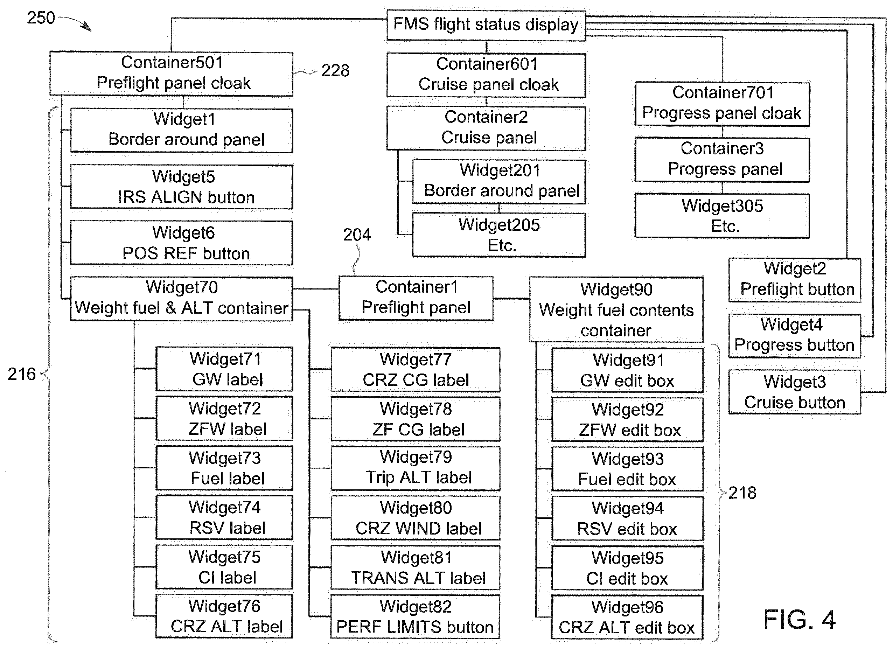

Fig. 4 depicts an example widget tree 250 according to example embodiments of the present disclosure. Tree 250 depicts an alternative organizational structure of widgets relative to tree 200. In particular, tree 250 includes static widgets 216 as grouped directly under preflight panel cloak 228. Tree 250 further depicts preflight panel container 204 as directly grouping container 224 and dynamic widgets 218. In this manner, in response to a user selection of preflight button 210, display manager 154 can disable the visibility attribute of preflight panel container 204, as opposed to container 224 as described with respect to tree 200. When dynamic widgets 218 are available for display, display manager 154 can enable the visibility attribute of preflight panel container 204.

FIG. 5 depicts another example widget tree 260 according to example embodiments of the present disclosure. In particular, tree 260 depicts yet another alternative organizational structure of widgets relative to trees 200 and 250. As shown, tree 260 includes a static widget container 230 and a dynamic widget container 232, each grouped on the same level directly under preflight panel cloak 228. Static widget container 230 can be configured to group each static widget (e.g. static widgets 216) associated with the preflight panel, and dynamic widget container 232 can be configured to group each dynamic widget (e.g. dynamic widgets 218) associated with the preflight panel. In this manner, in response to a user selection of preflight button 210, user application 130 can request that display manager 154 disable the visibility attribute of dynamic widget container 232 and enable the visibility attribute of static widget container 320 to display the user interface elements associated with static widgets 216. When dynamic widgets 218 are available for display, user application 130 can request that display manager 154 enable the visibility attribute of dynamic widget container 232 to display dynamic widgets 218 and the up-to-date data values associated with dynamic widgets 218.

It will be appreciated that widget trees 200, 250, and 260 depicted in FIGS. 3, 4, and 5 respectively are depicted for illustrative purposes only. In particular, it will be appreciated by those skilled in the art that various other suitable widget tree structures can be used without deviating from the scope of the present disclosure. For instance, one or more other suitable widget tree structures can be used having various suitable widget types, widget amounts, widget configurations, widget hierarchies, etc.

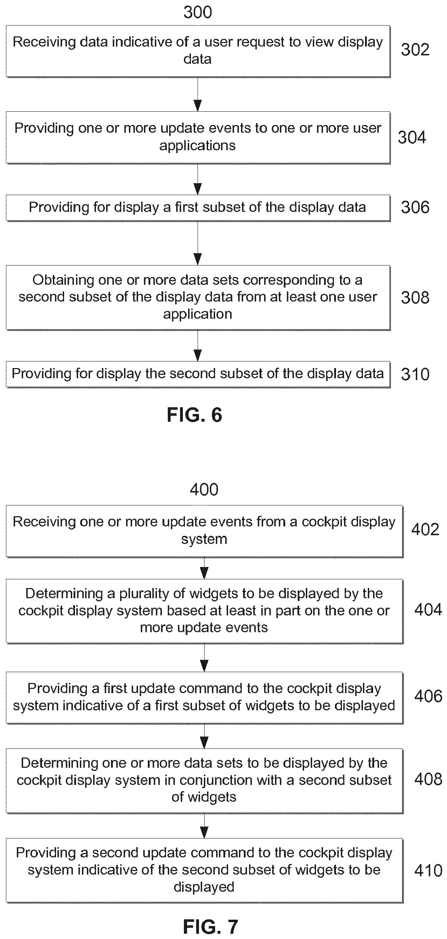

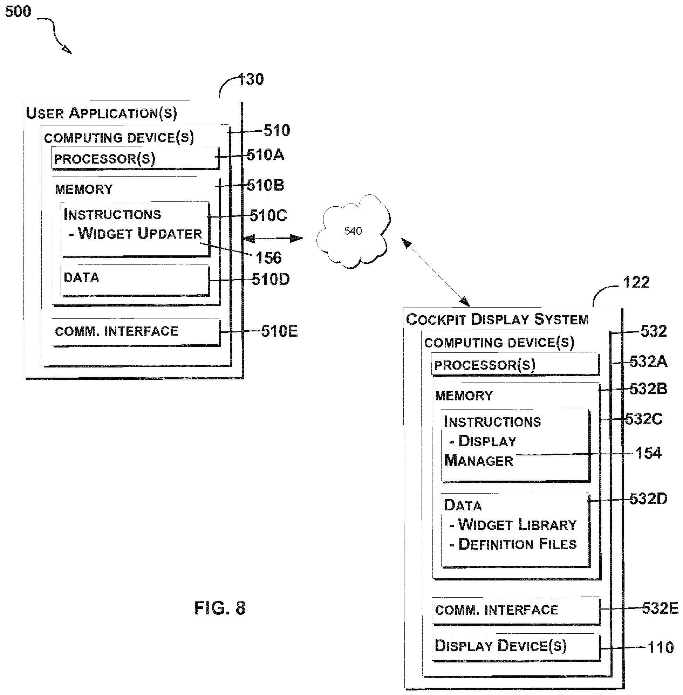

FIG. 6 depicts a flow diagram of an example method (300) of regulating display data according to example embodiments of the present disclosure. Method (300) can be implemented by one or more computing devices, such as one or more of the computing devices depicted in FIG. 8. In particular implementations, the method (300) can be implemented by the display manager 154 depicted in FIG. 2. In addition, FIG. 6 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure.

At (302), method (300) includes receiving data indicative of a user request to view display data. As indicated, the data indicative of the user request can be associated with a user interaction with a user interface of a cockpit display system in an aerial vehicle. For instance, the user can interact with the user interface to prompt the user interface to display one or more graphical representations (e.g. widgets). In some implementations, the graphical representations can be displayed as part of a panel that includes a plurality of graphical representations associated with one or more categories.

At (304), method (300) can include providing one or more update events to one or more user applications associated with the aerial vehicle. For instance, the one or more user applications can be communicatively coupled to the cockpit display system. The one or more updated events can be indicative of the user request.

At (306), method (300) can include providing for display a first subset of the display data. In some implementations, the first subset of display data can be displayed in response to receiving an update command from a user application. For instance, the first subset of the display data can include a first subset of data representations to be displayed in response to the user request. In some implementations, the first subset of the data can be determined based at least in part on an availability for display of the graphical representations. As indicated above, the first subset of the display data can be provided for display in accordance with a definition file associated with the data representations to be displayed. In some implementations, the first subset can correspond to one or more static data representations (e.g. widgets) that do not include editable data.

As indicated above, in some implementations, providing for display the first subset of the display data can include controlling one or more visibility attributes associated with the graphical representations associated with the first subset. For instance, providing for display the first subset of display data can include enabling a visibility attribute of each graphical representation of the first subset of display data. As another example, providing for display the first subset of display data can include enabling a visibility attribute of one or more container widgets configured to group a plurality of graphical representations.

At (308), method (300) can include obtaining one or more data sets corresponding to a second subset of the display data from at least one user application. The data sets can be used to populate the graphical representations of the second subset of the display data. The data sets can be determined by the user application(s). For instance, in some implementations the data sets can include current values or metrics associated with one or more aspects of an operation of the aerial vehicle.

At (310), method (300) can include providing for display the second subset of the display data. In some implementations, the second subset of display data can be provided for display in response to receiving an update command from the at least one user application. For instance, the second subset of the display data can be provided for display in response to receiving the data sets from the user application(s). In some implementations, the first and second subsets of data can collectively include the entirety of the display data to be displayed in response to the user request. In this manner, when the first and second subsets of the display data have been displayed, the entirety of the display data can be visible to the user by the cockpit display system.

FIG. 7 depicts a flow diagram of an example method (400) of regulating the display of data by a cockpit display system according to example embodiments of the present disclosure. Method (400) can be implemented by one or more computing devices, such as one or more of the computing devices depicted in FIG. 8. In particular implementations, the method (400) can be implemented by the widget updater 156 depicted in FIG. 2. In addition, FIG. 7 depicts steps performed in a particular order for purposes of illustration and discussion. Those of ordinary skill in the art, using the disclosures provided herein, will understand that the steps of any of the methods discussed herein can be adapted, rearranged, expanded, omitted, or modified in various ways without deviating from the scope of the present disclosure.

At (402), method (400) can include receiving one or more update events from a cockpit display system. For instance, a cockpit display system associated with an aerial vehicle can provide one or more update events to a user application associated with the aerial vehicle in response to a user input associated with a user interface of the display system. The update event(s) can be indicative the user input.

At (404), method (400) can include determining a plurality of widgets to be displayed by the cockpit display system based at least in part on the one or more update events. For instance, the plurality of widgets can include a first subset of widgets and a second subset of widgets. The plurality of widgets can be organized in a tree-like, hierarchical manner. In this manner, upon receiving the one or more update events, the user application can determine the plurality of widgets to be displayed in accordance with the organizational structure of the widgets. The widgets to be displayed can include static widgets and/or dynamic widgets.

At (406), method (400) can include providing a first update command to the cockpit display system indicative of a first subset of widgets to be displayed by the cockpit display system. For instance, the first update command can include instructions to enable or disable the visibility attributes of one or more widgets. In particular, the first update command can include instructions to disable the visibility attributes of one or more currently displayed widgets. For instance, such currently displayed widgets can be replaced by other widgets in response to the user input. In this manner, the first update command can include instructions to disable the visibility attributes of the currently displayed widgets, and to enable the visibility attributes of the first subset of widgets to be displayed in response to the user input. The first update command can further include instructions for the cockpit display system to disable the visibility attributes of a second subset of widgets to be displayed

The first subset of widgets to be displayed can correspond to the static widgets to be displayed in response to the user input, and the second subset of widgets to be displayed can correspond to the dynamic widgets to be displayed in response to the user input. In this manner, the visibility attributes of the static widgets can be enabled prior to the enabling of the visibility attributes of the dynamic widgets. In some implementations, the first subset can be grouped together and the second subset can be grouped together within the hierarchal structure. The first subset can be grouped under a first container widget and the second subset can be grouped under a second container widget. In some implementations, the second container widget can be further grouped under the first container widget. In this manner, the visibility attributes of the first and second widget subsets can be controlled by controlling the visibility attributes of the first and second container widgets under which the first and second subsets are respectively grouped. In such implementations, the first update command can include instructions for the cockpit display system to enable visibility attribute of the first container widget grouping the first subset and to disable the visibility attribute of the second container widget grouping the second subset.

At (408), method (400) can include determining one or more sets of data to be displayed by the cockpit display system in conjunction with the second subset of widgets. For instance, the data sets can be associated with one or more aspects of the user application. For instance, if the user application is a flight management system, the data may include data associated with a flight plan of the aerial vehicle, such as a current speed, predicted time of arrival, etc. In this manner, the user application can determine current data values associated with the dynamic widgets to be displayed.

At (410), method (400) can include providing a second update command to the cockpit display system indicative of the second subset of widgets to be displayed. For instance, the second update command can include the updated data sets determined by the user application. The second update command can further include instructions for the cockpit display system to enable the visibility of the second subset of widgets. In continuing the example from above, the second update command can include instructions to enable the visibility attribute of the second container widget under which the second subset of widgets are grouped.

The second update command can be provided subsequent to the first update command. In some implementations, the second update command can be provided upon an availability of the data to be displayed in conjunction with the dynamic widgets. In such implementations, the static widgets associated with the first subset can be displayed by the cockpit display system prior to the dynamic widgets associated with the second subset.

FIG. 8 depicts an example system 500 according to example embodiments of the present disclosure. The system 500 can include the cockpit display system 122 and one or more client computing devices 510. The client computing device(s) 510 and the cockpit display system 122 can be configured to communicate via a wired and/or wireless network 540. Network 540 can include any suitable communications network for transmitting signals associated with the aircraft 100.

As shown, the cockpit display system 122 can include one or more computing device(s) 532. The computing device(s) 532 can include one or more processor(s) 532A and one or more memory device(s) 532B. The one or more processor(s) 532A can include any suitable processing device, such as a microprocessor, microcontroller, integrated circuit, logic device, or other suitable processing device. The one or more memory device(s) 532B can include one or more computer-readable media, including, but not limited to, non-transitory computer-readable media, RAM, ROM, hard drives, flash drives, or other memory devices.

The one or more memory device(s) 532B can store information accessible by the one or more processor(s) 532A, including computer-readable instructions 532C that can be executed by the one or more processor(s) 532A. The instructions 532C can be any set of instructions that when executed by the one or more processor(s) 532A, cause the one or more processor(s) 532A to perform operations. The instructions 532C can be software written in any suitable programming language or can be implemented in hardware. In some embodiments, the instructions 532C can be executed by the one or more processor(s) 532A to cause the one or more processor(s) 532A to perform operations, such as the operations described with reference to the display manager 154 of FIG. 2.

The memory device(s) 532B can further store data 532D that can be accessed by the processors 532A. The data can include or otherwise be associated with the widget library 152 of FIG. 2 and/or one or more user application definition files associated with user application(s) 130.

The computing device(s) 532 can include various input/output devices for providing and receiving information from a user, such as a touch screen, touch pad, data entry keys, speakers, and/or a microphone suitable for voice recognition. For instance, the computing device(s) 532 can include display device(s) 110 for presenting a user interface displaying data according to example aspects of the present disclosure.

The cockpit display system 122 can also include a network interface 532E used to communicate, for example, with the other components of system 300. The network interface 532E can include any suitable components for interfacing with one or more network(s), including for example, transmitters, receivers, ports, controllers, antennas, or other suitable components.

Similar to the cockpit display system 122, the user application(s) 130 can include one or otherwise be hosted by one or more computing devices 510 that include processor(s) 510A and a memory 510B. The one or more processor(s) 510A can include one or more central processing units (CPUs), graphics processing units (GPUs) dedicated to efficiently rendering images or performing other specialized calculations, and/or other processing devices. The memory 510B can include one or more computer-readable media and can store information accessible by the one or more processors 510A, including instructions 510C that can be executed by the one or more processors 510A and data 510D. For instance, the memory 510B can store instructions 510C that can be executed by the one or more processor(s) 510A to cause the one or more processor(s) 510A to perform operations, such as the operations described with reference to widget updater 156 of FIG. 2.

The computing device(s) 510 can also include a network interface used to communicate with one or more remote computing devices (e.g. computing device(s) 532) over the network 540. The network interface can include any suitable components for interfacing with one more networks, including for example, transmitters, receivers, ports, controllers, antennas, or other suitable components.

The technology discussed herein makes computer-based systems and actions taken by and information sent to and from computer-based systems. One of ordinary skill in the art will recognize that the inherent flexibility of computer-based systems allows for a great variety of possible configurations, combinations, and divisions of tasks and functionality between and among components. For instance, processes discussed herein can be implemented using a single computing device or multiple computing devices working in combination. Databases, memory, instructions, and applications can be implemented on a single system or distributed across multiple systems. Distributed components can operate sequentially or in parallel.

Although specific features of various embodiments may be shown in some drawings and not in others, this is for convenience only. In accordance with the principles of the present disclosure, any feature of a drawing may be referenced and/or claimed in combination with any feature of any other drawing.

This written description uses examples to disclose the invention, including the best mode, and also to enable any person skilled in the art to practice the invention, including making and using any devices or systems and performing any incorporated methods. The patentable scope of the invention is defined by the claims, and can include other examples that occur to those skilled in the art. Such other examples are intended to be within the scope of the claims if they include structural elements that do not differ from the literal language of the claims, or if they include equivalent structural elements with insubstantial differences from the literal languages of the claims.

Various aspects and embodiments of the present invention are defined by the following numbered clauses:
1. A system for displaying data, the system comprising
   a display system comprising one or more display windows configured to provide for display graphical representations of data; and
   one or more user applications configured to provide data to the display system;
   wherein the display system is configured to:
   receive data indicative of a user request to view display data;
   provide for display on at least one of the one or more display windows a first subset of the display data;
   obtain one or more data sets corresponding to a second subset of the display data from at least one of the one or more user applications; and
   subsequent to obtaining the one or more data sets, provide for display on at least one of the one or more display windows the second subset of the display data.
2. The system of clause 1, wherein the display system is further configured to determine one or more update events based at least in part on the data indicative of the user request.
3. The system of clause 1 or 2, wherein the display system is further configured to provide the one or more update events to the at least one user application.
4. The system of any preceding clause, wherein the at least one user application is configured to:
   determine a first subset of display data and a second subset of display data to be displayed by the cockpit display system based at least in part on the one or more update events; and
   determine the one or more data sets responsive to receiving the one or more update events, the one or more data sets being associated with the second subset of display data.
5. The system of any preceding clause, wherein the at least one user application is configured to:
   provide a first update command to the cockpit display system, the first update command instructing the cockpit display system to display the first subset of display data; and
   subsequent to determining the one or more data sets, providing a second update command to the cockpit display system, the second update command instructing the cockpit display system to display the second subset of display data.
6. The system of any preceding clause, wherein the first subset of the display data comprises one or more static data representations.
7. The system of any preceding clause, wherein the display system is configured to provide for display a first subset of the display data by enabling a visibility attribute associated with the one or more static data representations.
8. The system of any preceding clause, wherein enabling a visibility attribute associated with the one or more static data representations comprises enabling the visibility parameter prior to obtaining the one or more data sets corresponding to the second subset of the display data.
9. The system of any preceding clause, wherein the second subset of the display data corresponds to one or more dynamic data representations.
10. The system of any preceding clause, wherein the one or more dynamic data representations comprise graphical representations associated with the one or more data sets.
11. The system of any preceding clause, wherein the display system is configured to provide for display the second subset of the display data by enabling a visibility attribute associated with the one or more dynamic data representations.
12. The system of any preceding clause, wherein the at least one user application comprises a flight management system.
13. The system of any preceding clause, wherein the display system is a cockpit display system associated with an aircraft.
14. An aircraft comprising:
   a display system comprising one or more display windows configured to provide for display graphical representations of data; and
   one or more user applications configured to:
      receive one or more update events from the display system, the one or more update events being indicative of a user interaction with the display system;
      determine a first subset of widgets to be displayed by the display system and a second subset of widgets to be displayed by the display system;
      provide a first update command to the display system instructing the display system to display the first subset of widgets;
      determine one or more data values to be displayed in conjunction with the second subset of widgets; and
      provide a second update command to the display system instructing the display system to display the second subset of widgets, the second update command further including the one or more data values to be displayed in conjunction with the second subset of widgets.
15. The aircraft of any preceding clause, wherein the first subset of widgets comprises one or more static widgets to be displayed by the display system, and wherein the second subset of widgets comprises one or more dynamic widgets to be displayed by the display system.
16. The aircraft of any preceding clause, wherein the first update command comprises instructions for the display system to enable one or more visibility attributes associated with the first subset of widgets and to disable one or more visibility attributes associated with the second subset of widgets.
17. The aircraft of any preceding clause, wherein the second update command comprises instructions for the display system to enable the one or more visibility attributs associated with the second subset of widgets.
18. A method of displaying data, the method comprising:
   receiving data indicative of a user request to view display data on a display system, the display system comprising one or more display windows;
   providing for display on at least one of the one or more display windows a first subset of the display data;
   obtaining one or more data sets corresponding to a second subset of the display data from a user application associated with the display system; and
   subsequent to obtaining the one or more data sets, providing for display on at least one of the one or more display windows the second subset of the display data.
19. The method of claim 18, further comprising:
   receiving a first update command from the user application, the first update command comprising instructions to display the first subset of display data;
   receiving a second update command from the user application, the second update command comprising the one or more data sets and instructions to display the second subset of data; and
   wherein obtaining one or more data sets corresponding to a second subset of the display data from comprises obtaining the one or more data sets from the second update command.
20. The method of any preceding clause, wherein the second subset of the display data comprises one or more dynamic data representations, each comprising graphical representations associated with the one or more data sets.

## Claims

1. A system (150) for displaying data, the system (150) comprising:
a display system (122) comprising one or more display windows (110) configured to provide for display graphical representations of data; and
one or more user applications (130) configured to provide data to the display system (122);
wherein the display system (122) is configured to:
receive data indicative of a user request to view display data;
provide for display on at least one of the one or more display windows (110) a first subset of the display data;
obtain one or more data sets corresponding to a second subset of the display data from at least one of the one or more user applications (130); and
subsequent to obtaining the one or more data sets, provide for display on at least one of the one or more display windows (110) the second subset of the display data.

2. The system (150) of claim 1, wherein the display system (122) is further configured to determine one or more update events based at least in part on the data indicative of the user request.

3. The system (150) of claim 2, wherein the display system (122) is further configured to provide the one or more update events to the at least one user application (130).

4. The system (150) of claim 3, wherein the at least one user application (130) is configured to:
determine a first subset of display data and a second subset of display data to be displayed by the display system (122) based at least in part on the one or more update events; and
determine the one or more data sets responsive to receiving the one or more update events, the one or more data sets being associated with the second subset of display data.

5. The system (150) of claim 4, wherein the at least one user application (130) is configured to:
provide a first update command to the display system (122), the first update command instructing the display system (122) to display the first subset of display data; and
subsequent to determining the one or more data sets, providing a second update command to the display system (122), the second update command instructing the display system (122) to display the second subset of display data.

6. The system (150) of any preceding claim, wherein the first subset of the display data comprises one or more static data representations.

7. The system (150) of claim 6, wherein the display system (122) is configured to provide for display a first subset of the display data by enabling a visibility attribute associated with the one or more static data representations.

8. The system (150) of either of claim 6 or 7, wherein enabling a visibility attribute associated with the one or more static data representations comprises enabling the visibility parameter prior to obtaining the one or more data sets corresponding to the second subset of the display data.

9. The system (150) of any of the preceding claims, wherein the second subset of the display data corresponds to one or more dynamic data representations.

10. The system (150) of claim 9, wherein the one or more dynamic data representations comprise graphical representations associated with the one or more data sets.

11. The system (150) of claim 10, wherein the display system (122) is configured to provide for display the second subset of the display data by enabling a visibility attribute associated with the one or more dynamic data representations.

12. The system (150) of any of the preceding claims, wherein the at least one user application (130) comprises a flight management system.

13. The system (150) of any of the preceding claims, wherein the display system (122) is a cockpit display system associated with an aircraft (100).

14. An aircraft (100) comprising:
a display system (122) comprising one or more display windows (110) configured to provide for display graphical representations of data; and
one or more user applications (130) configured to:
receive one or more update events from the display system (122), the one or more update events being indicative of a user interaction with the display system (122);
determine a first subset of widgets to be displayed by the display system (122) and a second subset of widgets to be displayed by the display system (122);
provide a first update command to the display system (122) instructing the display system (122) to display the first subset of widgets;
determine one or more data values to be displayed in conjunction with the second subset of widgets; and
provide a second update command to the display system (122) instructing the display system (122) to display the second subset of widgets, the second update command further including the one or more data values to be displayed in conjunction with the second subset of widgets.

15. The aircraft (100) of claim 14, wherein the first subset of widgets comprises one or more static widgets to be displayed by the display system (122), and wherein the second subset of widgets comprises one or more dynamic widgets to be displayed by the display system (122).
